# EUROPÄISCHE PATENTSCHRIFT

(11) **EP 2 154 524 B1**
(45) Veröffentlichungstag und Bekanntmachung des Hinweises auf die Patenterteilung: **03.10.2012**
(21) Anmeldenummer: 09100328.5
(22) Anmeldetag: 10.06.2009
(51) Int. Cl.: G01N 27/407

(54) **Abgassensor**
Exhaust gas sensor
Capteur de gaz d'échappement

(30) Priorität: 06.08.2008 DE 102008041041
(43) Veröffentlichungstag der Anmeldung: 17.02.2010
(73) Patentinhaber: ROBERT BOSCH GMBH, 70442 Stuttgart (DE)
(72) Erfinder: Harzer, Olav, 70374, Stuttgart (DE); Heinzelmann, Stefan, 71394, Kernen (DE); Michaelis, Burkhard, 71665, Vaihingen/Enz (DE); Baunach, Thorsten, 72119, Ammerbuch (DE); Grabis, Johannes, 71272, Renningen (DE); Hetznecker, Alexander, 76275, Ettlingen (DE); Zimmermann, Christoph, 72461, Albstadt (DE); Schmidt, Ralf, 70839, Gerlingen (DE); Schittenhelm, Henrik, 70182, Stuttgart (DE); Holzknecht, Christopher, 70186, Stuttgart (DE); Koblmiller, Saskia, 70469, Stuttgart (DE)

(56) Entgegenhaltungen:
- EP-A1- 1 471 346
- EP-A2- 1 279 957
- WO-A1-00/73779
- DE-A1-102005 006 380
- DE-A1-102007 000 245

## Beschreibung

### Stand der Technik

Die Erfindung geht aus von einem Abgassensor nach der Gattung des Hauptanspruchs.

Es ist schon ein Abgassensor aus der EP 1471346 A1 bekannt, mit einem Sensorelement, das in einem Durchgangskanal eines ersten Gehäuseabschnitts mittels einer Halterung gelagert ist, mit einem abgasseitigen Abschnitt aus dem Durchgangskanal vorsteht und an diesem abgasseitigen Abschnitt des Sensorelementes von einem äußeren Schutzrohr und einem inneren Schutzrohr umgeben ist, wobei am inneren Schutzrohr zumindest ein Drallerzeugungsmittel vorgesehen ist, das eine Einlassöffnung im Mantel des inneren Schutzrohres und eine Auslassöffnung in einen Innenraum des inneren Schutzrohres aufweist. Nachteilig ist, dass das Sensorelement mit einem vergleichsweise langen Abschnitt abgasseitig aus dem Durchgangskanal herausragen muss, um ein ausreichendes dynamisches Ansprechverhalten des Abgassensors auf Änderungen im Abgas zu erhalten. Weitere Abgassensoren sind aus der WO 00/73779 A1, der DE 10 2005 006380 A1 und der DE 10 2007 000245 bekannt.

### Vorteile der Erfindung

Der erfindungsgemäße Abgassensor mit den kennzeichnenden Merkmalen des Hauptanspruchs hat demgegenüber den Vorteil, dass der Abgassensor nur mit einem kurzen Abschnitt abgasseitig aus dem Durchgangskanal vorzustehen braucht und trotzdern noch ein ausreichendes dynamisches Ansprechverhalten aufweist. Dies wird erfindungsgemäß erreicht, indem die zumindest eine Anslassöffnung der Drallerzeugungsmittel zur Halterung hin ausgerichtet ist.

Durch das Verkürzen des Sensorelementes gegenüber dem Stand der Technik verringern sich die Herstellungskosten für das Sensorelement

Durch die in den Unteransprüchen aufgeführten Maßnahmen sind vorteilhafte Weiterbildungen und Verbesserungen des im Hauptanspruch angegebenen Abgassensors möglich.

Resonders vorteilhaft ist, wenn die Auslassöffnung des zumindest einen Drallerzeugungsmittels derart zur Halterung hin zeigt, dass die Strömung in axialer Richtung zur Halterung h in gelenkt wird. Auf diese Weise wird das Abgas an den Fuß des herausragenden Sensorelementabschnitts geleitet und dort umgelenkt, so dass ein konvektiver Gasaustausch erfolgt.

Weiterhin vorteilhaft ist, wenn die Auslassöffnung des zumindest einen Drallerzeugungsmittels eine Abrisskante aufweist, die bezüglich der Längserstreckung des Sensorelementes schräg ausgerichtet ist. Gemäß dem Ausführungsbeispiel ist das Drallerzeugungsmittel hergestellt durch einen Längsschnitt in den Mantel des inneren Schutzrohrs und durch Eindrücken eines an den Längsschnitt angrenzenden Mantelabschnitts, wobei der Längsschnitt bezüglich der Längserstreckung des Sensorelementes schräg ausgerichtet ist. Dabei weist die Abrisskante oder der Längsschnitt einen Winkel zur Längserstreckung des Sensorelementes auf, der im Bereich zwischen null und neunzig Grad liegen kann.

Erfindungsgemäß ist vorgesehen, dass der erste Gehäuseabschnitt am Ausgang des Durchgangskanals einen Ringabsalz aufweist, der derart ausgeführt ist, dass sein Innenumfang in radialer Richtung bezüglich der Sensorelementachse gesehen im Bereich des inneren Schutzrohrs liegt. Erfindungsgemäß ist der Ringabsatz an seinem Innenumfang stufenförmig ausgeführt. Auf diese Weise wird das Abgas wirkungsvoll an den Fuß des herausragenden Sensorelementabschnitts geleitet und bewirkt durch den verringerten Strömungswiderstand einen schuellen Gasaustausch in diesem Bereich, der zu einer höheren Dynamik des Abgassensors beitragt.

Desweiteren vorteilhaft ist, wenn das Sensorelement an seinem abgasseitigen Ende einen sensitiven Abschnitt aufweist, der im Bereich des Ringabsatzes angeordnet ist. Auf diese Weise braucht das Sensorelement nur bis in den Bereich des Ringabsatzes hineinzureichen.

Außerdem vorteilhaft ist, wenn das äußere Schutzrohr zwei durch messerverschiedene Schutzrohrabschnitte aufweist, wobei der durchmessergrößere Schutzrohrabschnitt eine Länge L2 und der durchmesserkleinere Schutzrohrabschnitt eine Länge L1 aufweist, wobei das Verhältnis von L1 zu L2 zwischen 1,2 und 2 liegt.

Durch die erfindungsgemäßen Drallerzeugungsmittel wird die Einbauwinkelunabhängigkeit verbessert, da der von den Drallerzeugungsmilteln erzeugte Drall eine gute Durchmischung im inneren Schutzrohr erreicht.

### Zeichnung

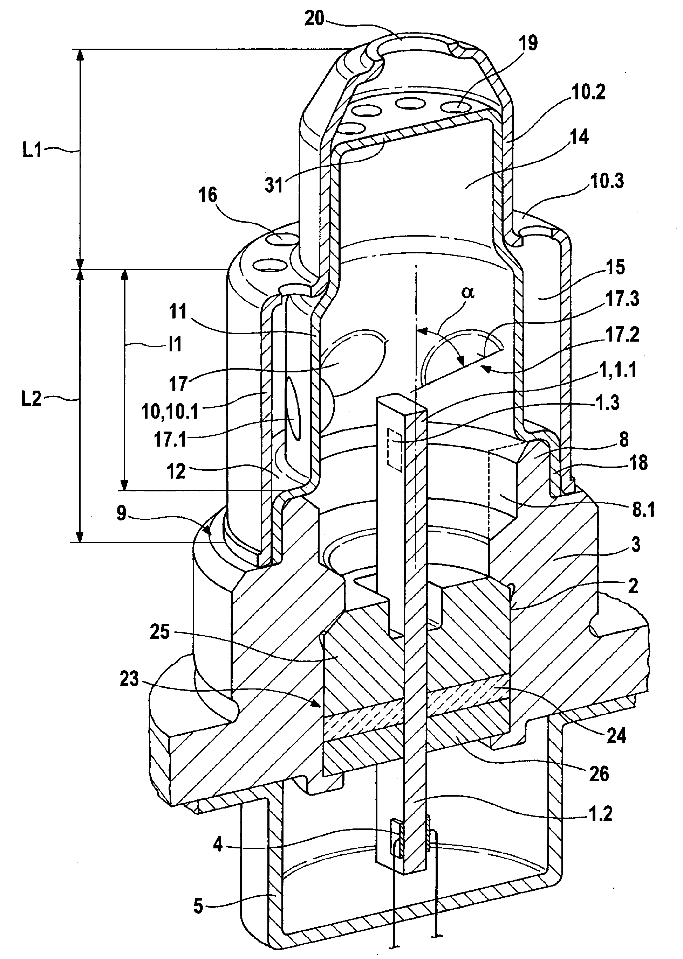

Ein Ausführungsbeispiel der Erfindung ist in der Zeichnung vereinfacht dargestellt und in der nachfolgenden Beschreibung näher erläutert.

### Beschreibung des Ausführungsbeispiels

Die Zeichnung zeigt einen erfindungsgemäßen Abgassensor.

Der Abgassensor ist beispielsweise eine Lambdasonde zur Bestimmung der Sauerstoffkonzentration oder ein Partikelsensor zur Bestimmung der Partikelkonzentration in einem Abgas der Brennkraftmaschine. Der Abgassensor kann aber ausdrücklich auch zur Bestimmung anderer physikalischer Größen eines beliebigen Gases verwendet werden.

Der Abgassensor hat ein Sensorelement 1, das in einem Durchgangskanal 2 eines ersten Gehäuseabschnitts 3 des Abgassensors gehalten ist. Das Sensorelement 1 erfasst die zu messende physikalische Größe des Abgases. Dazu ragt das Sensorelement 1 mit einem abgasseitigen Abschnitt 1.1 aus dem Durchgangskanal 2 in das Abgas einer Abgasleitung. An dem dem abgasseitigen Abschnitt 1.1 abgewandten Ende des Sensorelementes 1 ist ein anschlussseitiger Abschnitt 1.2 vorgesehen, der elektrische Anschlusskontakte 4 zur Ableitung der Messsignale des Sensorelementes 1 aufweist. Der aus dem Durchgangskanal 2 herausragende Abschnitt 1.2 des Sensorelementes 1 ist beispielsweise von einem zweiten Gehäuseabschnitt 5 umschlossen, der mit dem ersten Gehäuseabschnitt 3 fest verbunden ist. Am abgasseitigen Abschnitt 1.1 des Sensorelementes 1 ist ein sensitiver Abschnitt 1.3 vorgesehen, mittels dem die physikalische Größe, beispielsweise die Sauerstoff- oder Partikelkonzentration, bestimmbar ist.

Das Sensorelement 1 ist in dem Durchgangskanal 2 mittels einer Halteeinrichtung 23 gehalten und gelagert. Die Halteeinrichtung 23 ist beispielsweise durch zwei Formkörper 25,26 und eine zwischen den Formkörpern 25,26 vorgesehene Pulverpackung 24 gebildet, kann aber auch eine beliebige andere Halterung, beispielsweise ein Glaskörper, sein.

Der abgasseitige Ausgang des Durchgangskanals 2 ist beispielsweise an einer Stirnseite 9 des ersten Gehäuseabschnitts 3 vorgesehen. Das aus dem Durchgangskanal 2 vorstehende Sensorelement 1 ist von einem äußeren Schutzrohr 10 und einem innerhalb des äußeren Schutzrohrs 10 angeordneten inneren Schutzrohr 11 umgeben. Die Schutzrohre 10,11 schützen das Sensorelement 1 wirksam vor Thermoschock durch im Abgas gebildetes Kondensat. Zumindest eines der beiden Schutzrohre 10,11 ist am ersten Gehäuseabschnitt 3 befestigt. Das innere Schutzrohr 11 weist an seinem dem ersten Gehäuseabschnitt 3 zugewandten Ende eine Schulter 12 auf. Gemäß dem Ausführungsbeispiel verläuft die Schulter 12 des inneren Schutzrohres 11 bis an das äußere Schutzrohr 10 und ist mit diesem fest verbunden. Zwischen dem Umfang des äußeren Schutzrohrs 10 und dem des inneren Schutzrohrs 11 ist ein radialer Ringspalt bzw. Zwischenraum 15 gebildet. Das Abgas gelangt über zumindest eine Einlassöffnung 16 in den Ringspalt 15 und wird über zumindest ein am inneren Schutzrohr 11 ausgebildetes Drallerzeugungsmittel 17 aus dem Ringspalt 15 in den vom inneren Schutzrohr 11 eingeschlossenen Innenraum 14 geleitet.

Das Drallerzeugungsmittel 17 wird auch als Drallklappe bezeichnet und weist einen Einlass 17.1 im Mantel des inneren Schutzrohres 11 und einen Auslass 17.2 in den Innenraum 14 des inneren Schutzrohres 11 auf. Im Stand der Technik zeigt der Auslass ausschließlich in Umfangsrichtung. Dadurch wird das Gas im Bereich unterhalb der Drallklappen, also in axialer Richtung zwischen der Halteeinrichtung 23 und den Drallklappen, im wesentlichen durch Diffusionsprozesse ausgetauscht.

Erfindungsgemäß ist dagegen vorgesehen, dass der Auslass 17.2 des Drallerzeugungsmittels 17 zur Halteeinrichtung 23 hin ausgerichtet ist. Auf diese Weise wird das Abgas in axialer Richtung zur Halteeinrichtung 23 hin gelenkt, so dass das Gas konvektiv und damit deutlich schneller ausgetauscht wird.

Durch die erfindungsgemäße Ausführung kann das Sensorelement 1 kürzer ausgeführt werden, wodurch Material für das Sensorelement 1 eingespart wird. Die Herstellungskosten verringern sich dadurch entsprechend.

Gemäß dem Ausführungsbeispiel ist das zumindest eine Drallerzeugungsmittel 17 hergestellt durch einen Längsschnitt in den Mantel des inneren Schutzrohrs 11 und durch Eindrücken eines an den Längsschnitt angrenzenden Mantelabschnitts, wobei der Längsschnitt bezüglich der Längserstreckung des Sensorelementes 1 schräg ausgerichtet ist. Durch das Eindrücken des an den Längsschnitt angrenzenden Mantelabschnitts ergibt sich eine gewölbte Kontur des Drallerzeugungsmittels 17. Am Auslass 17.2 des zumindest einen Drallerzeugungsmittels 17 ist eine dem Längsschnitt gegenüberliegende, gebogene Abrisskante 17.3, die durch die erfindungsgemäße Ausführung bezüglich der Längserstreckung des Sensorelementes 1 in der Projektion schräg ausgerichtet ist. Beispielsweise schließen die Abrisskante 17.3 bzw. der Längsschnitt und die Längsachse des Sensorelementes 1 einen Winkel α ein, der im Bereich zwischen null und neunzig Grad, insbesondere fünfundvierzig bis siebzig Grad liegt. Das zumindest eine Drallerzeugungsmittel 17 ist in der Projektion kreisförmig, halbkreisförmig oder rechteckförmig ausgeführt.

Der erste Gehäuseabschnitt 3 weist am Ausgang des Durchgangskanals 2 beispielsweise einen Ringabsatz 8 auf, dessen Innenumfang in radialer Richtung bezüglich der Sensorelementachse gesehen im Bereich des inneren Schutzrohrs 11 liegt. Der Ringabsatz 8 ist Teil des Durchgangskanals 2 . Beispielsweise ist der Ringabsatz 8 an seinem Innenumfang derart mittels einer Ausnehmung 8.1 erweitert, dass sein Umfang im Bereich des inneren Schutzrohrs 11 liegt. Durch die Ausnehmung 8.1 ist der Ringabsatz 8 am Innenumfang beispielsweise stufenförmig oder konisch ausgeführt. Die Ausnehmung 8.1 leitet das Abgas an den Fuß des abgasseitigen Abschnitts 1.1 des Sensorelementes 1 und tauscht das dortige Gasvolumen aus.

Die Schulter 12 des inneren Schutzrohrs 11 liegt beispielsweise stirnseitig und/oder umfangsseitig am Ringabsatz 8 an. Anstatt anzuliegen kann die Schulter 12 auch nahe dem Ringabsatz 8 angeordnet sein. Die Schulter 12 des inneren Schutzrohres 11 ist beispielsweise derart ausgebildet, dass sie den Ringabsatz 8 umgreift bzw. umschließt und mit einem Ringkragen 18 am Umfang des Ringabsatzes 8 und am Innenumfang des äußeren Schutzrohres 10 anliegt.

Das äußere Schutzrohr 10 weist beispielsweise zwei durchmesserverschiedene Schutzrohrabschnitte 10.1,10.2 auf, wobei das innere Schutzrohr 11 mit seinem der Schulter 12 abgewandten Ende in den durchmesserkleineren Schutzrohrabschnitt 10.2 des äußeren Schutzrohres 10 hineinragt.. Zwischen den durchmesserverschiedenen äußeren Schutzrohrabschnitten 10.1,10.2 ist ein Absatz 10.3 gebildet, an dem die zumindest eine Einlassöffnung 16 vorgesehen ist. An einem Boden 31 des inneren Schutzrohres 11 sind mehrere Ausgangsöffnungen 19 vorgesehen, die beispielsweise auf einem gedachten Ring angeordnet sind. Der durchmesserkleinere Schutzrohrabschnitt 10.2 des äußeren Schutzrohres 10 hat zumindest eine stirnseitige Ausgangsöffnung 20, die zu den Ausgangsöffnungen 19 des inneren Schutzrohres 11 in axialer Richtung beabstandet ist. Über zumindest eine Ausgangsöffnung 19 des inneren Schutzrohres 11 und beispielsweise eine Ausgangsöffnung 20 des äußeren Schutzrohrs 10 wird das Abgas aus dem Innenraum 14 zurück in die Abgasleitung geleitet. Die beiden Schutzrohre 10,11 können aber auch anders ausgeführt sein, beispielsweise könnte der durchmesserkleinere Schutzrohrabschnitt 10.2 des äußeren Schutzrohres 10 entfallen.

Der durchmessergrößere Schutzrohrabschnitt 10.1 hat eine Länge L2 und der durchmesserkleinere Schutzrohrabschnitt eine Länge L1, wobei das Verhältnis von L1 zu L2 zwischen 1,2 und 2 liegt. Im Stand der Technik liegt das Verhältnis L1/L2 dagegen im Bereich von 1.

Durch das Absenken der schulterförmigen Absatzes 10.3 zum ersten Gehäuseabschnitt 3 hin wird eine Vergrößerung der Stauzone und somit eine verbesserte Durchströmung der Schutzrohre 10,11 erreicht. Außerdem wird das Mischungsvolumen im Zwischenraum 15 verringert, wodurch sich eine höhere Ansprechdynamik des Sensorelementes einstellt.

## Patentansprüche

1. Abgassensor mit einem Sensorelement, das in einem Durchgangskanal (2) eines ersten Gehäuseabschnitts (3) mittels einer Halteeinrichtung (23) gelagert ist, mit einem abgasseitigen Abschnitt (1.1) aus dem Durchgangskanal (2) vorsteht und an diesem abgasseitigen Abschnitt (1.1) des Sensorelementes von einem äußeren Schutzrohr (10) und einem inneren Schutzrohr (11) umgeben ist, wobei am inneren Schutzrohr (11) zumindest ein Drallerzeugungsmittel (17) vorgesehen ist, das einen Einlass im Mantel des inneren Schutzrohres (11) und einen Auslass (17.2) in einen Innenraum des inneren Schutzrohres (11) aufweist wobei der Auslass (17.2) der Drallerzeugungsmittel (17) zur Halteeinrichtung (23) hin ausgerichtet ist und wobei der Durchgangskanal (2) des ersten Gehäuseabschnitts (3) am Ausgang des Durchgangskanals (2) einen Ringabsatz (8) aufweist, dessen Innenumfang in radialer Richtung bezüglich einer Sensorelementachse gesehen im Bereich des inneren Schutzrohrs (11) liegt, **dadurch gekennzeichnet, dass** der Ringabsatz (8) an seinem Innenumfang stufenförmig ausgeführt ist, um Abgas an den Fuß des herausragenden Sensorelementabschnitt zu leiten.

2. Abgassensor nach Anspruch 1, **dadurch gekennzeichnet, dass** der Auslass (17.2) des zumindest einen Drallerzeugungsmittels (17) derart zur Halteeinrichtung (23) hin zeigt, dass die Strömung In axialer Richtung zur Halteeinrichtung (23) hin gelenkt wird.

3. Abgassensor nach Anspruch 1, **dadurch gekennzeichnet, dass** der Auslass des zumindest einen Drallerzeugungsmittels (17) eine Abrisskante aufweist, die bezüglich der Längserstreckung des Sensorelementes (1) schräg ausgerichtet ist.

4. Abgassensor nach Anspruch 3, **dadurch gekennzeichnet, dass** das zumindest eine Drallerzeugungsmittel (17) hergestellt ist durch einen Längsschnitt in den Mantel des inneren Schutzrohrs (11) und durch Eindrücken eines an den Längsschnitt angrenzenden Mantelabschnitts, wobei der Längsschnitt bezüglich der Längserstreckung des Sensorelementes (1) schräg ausgerichtet ist.

5. Abgassensor nach einem der Ansprüche 3 oder 4, **dadurch gekennzeichnet, dass** die Abrisskante (17.3) oder der Längsschnitt einen Winkel zur Längserstreckung des Sensorelementes (1) aufweist zwischen 0 und 90 Grad.

6. Abgassensor nach Anspruch 1, **dadurch gekennzeichnet, dass** das Drallerzeugungsmittel eine gewölbte Kontur aufweist.

7. Abgassensor nach Anspruch 4, **dadurch gekennzeichnet, dass** das Drallerzeugungsmittel in der Projektion kreisförmig, halbkreisförmig oder rechteckförmig ausgeführt ist.

8. Abgassensor nach Anspruch 2, **dadurch gekennzeichnet, dass** das Sensorelement (1) an seinem abgasseitigen Ende einen sensitiven Abschnitt (1.3) aufweist, der im Bereich des Ringabsatzes (8) angeordnet ist.

9. Abgassensor nach Anspruch 1, **dadurch gekennzeichnet, dass** das äußere Schutzrohr (10) zwei durchmesserverschiedene Schutzrohrabschnitte (10.1,10.2) aufweist, wobei der durchmessergrößere Schutzrohrabschnitt (10.1) eine Länge L2 und der durchmesserkleinere Schutzrohrabschnitt eine Länge L1 aufweist, wobei das Verhältnis von L1 zu L2 zwischen 1,2 und 2 liegt.

## Claims

1. Exhaust gas sensor with a sensor element which is mounted in a passage duct (2) of a first housing portion (3) by means of a holding device (23), projects with an exhaust gas-side portion (1.1) out of the passage duct (2) and is surrounded at this exhaust gas-side portion (1.1) of the sensor element by an outer protective tube (10) and by an inner protective tube (11), there being provided on the inner protective tube (11) at least one swirl generation means (17) which has an inlet in the casing of the inner protective tube (11) and an outlet (17.2) into an inner space of the inner protective tube (11), the outlet (17.2) of the swirl generation means (17) being oriented towards the holding device (23), and the passage duct (2) of the first housing portion (3) having at the exit of the passage duct (2) an annular shoulder (8), the inner circumference of which lies in the region of the inner protective tube (11), as seen in the radial direction with respect to a sensor-element axis, **characterized in that** the annular shoulder (8) is designed to be step-shaped on its inner circumference, in order to conduct exhaust gas to the foot of the projecting sensor-element portion.

2. Exhaust gas sensor according to Claim 1, **characterized in that** the outlet (17.2) of the at least one swirl generation means (17) points towards the holding device (23) in such a way that the flow in the axial direction is steered towards the holding deice (23).

3. Exhaust gas sensor according to Claim 1, **characterized in that** the outlet of the at least one swirl generation means (17) has a breakaway edge which is oriented obliquely with respect to the longitudinal extent of the sensor element (1).

4. Exhaust gas sensor according to Claim 3, **characterized in that** the at least one swirl generation means (17) is produced by means of a longitudinal cut in the casing of the inner protective tube (11) and by pressing in a casing portion adjacent to the longitudinal cut, the longitudinal cut being oriented obliquely with respect to the longitudinal extent of the sensor element (1).

5. Exhaust gas sensor according to either one of Claims 3 and 4, **characterized in that** the breakaway edge (17.3) or the longitudinal cut has an angle to the longitudinal extent of the sensor element (1) of between 0 and 90 degrees.

6. Exhaust gas sensor according to Claim 1, **characterized in that** the swirl generation means has a curved contour.

7. Exhaust gas sensor according to Claim 4, **characterized in that** the swirl generation means is designed in projection to be circular, semicircular or rectangular.

8. Exhaust gas sensor according to Claim 2, **characterized in that** the sensor element (1) has at its exhaust gas-side end a sensitive portion (1.3) which is arranged in the region of the annular shoulder (8).

9. Exhaust gas sensor according to Claim 1, **characterized in that** the outer protective tube (10) has two protective-tube portions (10.1, 10.2) of differing diameter, the protective-tube portion (10.1) of larger diameter having a length L2 and the protective-tube portion of smaller diameter having a length L1, the ratio of L1 to L2 lying between 1.2 and 2.

## Revendications

1. Sonde de gaz d'échappement dotée d'un élément de sonde monté dans un canal de passage (2) d'une première partie (3) de boîtier au moyen d'un dispositif de maintien (23),
une partie (1.1) située côté gaz d'échappement débordant du canal de passage (2) et sur cette partie (1.1) de l'élément de sonde située du côté du gaz d'échappement étant entourée par un tube extérieur de protection (10) et par un tube intérieur de protection (11),
au moins un moyen (17) de formation de tourbillons étant prévu sur le tube intérieur de protection (11) et présentant une admission située dans l'enveloppe du tube intérieur de protection (11) et une sortie (17.2) située dans un espace intérieur du tube intérieur de protection (11),
la sortie (17.2) du moyen (17) de formation de tourbillon étant orientée en direction du dispositif de maintien (23) et le canal de passage (2) de la première partie (3) de boîtier présentant à la sortie du canal de passage (2) un appendice annulaire (8) dont la périphérie intérieure est située dans la direction radiale par rapport à l'axe de l'élément de sonde au niveau du tube intérieur de protection (11), **caractérisée en ce que**
l'appendice annulaire (8) présente sur sa périphérie intérieure des gradins qui guident les gaz d'échappement vers le pied de la partie en débord de l'élément de sonde.

2. Sonde de gaz d'échappement selon la revendication 1, **caractérisée en ce que** la sortie (17.2) du ou des moyens (17) de formation de tourbillon est orientée vers le dispositif de maintien (23) de telle sorte que l'écoulement soit dévié dans la direction axiale vers le dispositif de maintien (23).

3. Sonde de gaz d'échappement selon la revendication 1, **caractérisée en ce que** la sortie du ou des moyens (17) de formation de tourbillon présente un bord de rupture qui est orienté obliquement par rapport à l'extension longitudinale de l'élément de sonde (1).

4. Sonde de gaz d'échappement selon la revendication 3, **caractérisée en ce que** le ou les moyens (17) de formation de tourbillon sont réalisés en formant une découpe longitudinale dans l'enveloppe du tube intérieur de protection (11) et en enfonçant une partie de l'enveloppe adjacente à la découpe longitudinale, la découpe longitudinale étant orientée obliquement par rapport à l'extension longitudinale de l'élément de sonde (1).

5. Sonde de gaz d'échappement selon l'une des revendications 3 ou 4, **caractérisée en ce que** le bord de rupture (17.3) ou la découpe longitudinale forment un angle compris entre 0 et 90 degrés par rapport à l'extension longitudinale de l'élément de sonde (1).

6. Sonde de gaz d'échappement selon la revendication 1, **caractérisée en ce que** le moyen de formation de tourbillons présente un contour ondulé.

7. Sonde de gaz d'échappement selon la revendication 4, **caractérisée en ce que** le moyen de formation de tourbillons a une projection circulaire, semi-circulaire ou rectangulaire.

8. Sonde de gaz d'échappement selon la revendication 2, **caractérisée en ce que** l'élément de sonde (1) présente à son extrémité située du côté des gaz d'échappement une partie sensible (1.3) disposée au niveau de l'appendice annulaire (8).

9. Sonde de gaz d'échappement selon la revendication 1, **caractérisée en ce que** le tube extérieur de protection (10) présente deux parties (10.1, 10.2) de tube de protection de diamètres différents, la partie (10.1) du tube de protection de plus grand diamètre présentant une longueur L2 et la partie de tube de protection de petit diamètre présentant une longueur L1, le rapport entre L1 et L2 étant compris entre 1,2 et 2.
